(19) Europäisches Patentamt
European Patent Office
Office européen des brevets

(11) **EP 2 552 751 B1**

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(51) Int Cl.:
**B60R 16/03** *(2006.01)* **H02J 7/14** *(2006.01)*
**H02J 7/34** *(2006.01)*

(21) Anmeldenummer: **11711558.4**

(22) Anmeldetag: **30.03.2011**

(86) Internationale Anmeldenummer:
**PCT/EP2011/054966**

(87) Internationale Veröffentlichungsnummer:
**WO 2011/121052 (06.10.2011 Gazette 2011/40)**

(54) **BORDNETZ FÜR EIN FAHRZEUG SOWIE STEUERVORRICHTUNG FÜR EIN BORDNETZ**

ON-BOARD SUPPLY SYSTEM FOR A VEHICLE AND CONTROL DEVICE FOR AN ON-BOARD SUPPLY SYSTEM

RÉSEAU DE BORD POUR VÉHICULE ET DISPOSITIF DE COMMANDE POUR RÉSEAU DE BORD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2010 DE 102010013457**

(43) Veröffentlichungstag der Anmeldung:
**06.02.2013 Patentblatt 2013/06**

(73) Patentinhaber: **Continental Automotive GmbH 30165 Hannover (DE)**

(72) Erfinder:
• **REICHOW, Dirk**
**93173 Wenzenbach (DE)**
• **STECKERMEIER, Tobias**
**93059 Regensburg (DE)**
• **GALLI, Tobias**
**93426 Roding (DE)**

(56) Entgegenhaltungen:
**WO-A1-99/41820          WO-A1-2006/121005
DE-A1- 10 342 178      US-A- 5 914 542
US-B1- 6 275 004**

**Beschreibung**

Die Erfindung betrifft ein Bordnetz für ein Fahrzeug sowie eine Steuervorrichtung zum Steuern eines Stromflusses in einem Bordnetz eines Fahrzeugs. Ferner betrifft die Erfindung ein Fahrzeug, insb. ein Hybridelektrofahrzeug, mit einem oben genannten Bordnetz. WO 99/41820-A1 offenbart ein Bordnetz und eine Steuervorrichtung gemäß dem Oberbegriff der Ansprüche 1 und 7.

Heutige Fahrzeuge weisen ein Bordnetz auf, welches in der Regel zwei oder mehr Energiequellen zur Versorgung von Energieverbrauchern wie z. B. Elektronikkomponenten im Bordnetz umfasst.

Eine der Energiequellen ist in der Regel als ein widerauf ladbarer Energiespeicher ausgebildet, welcher bspw. eine Batterie oder ein Doppelschichtkondensator umfasst. Diese als Energiespeicher ausgebildete Energiequelle wird in der Regel von einer oder mehreren anderen Energiequelle mit Strom aufgeladen und dient in der Regel als einzige Notenergiequelle während einer Betriebsruhephase des Fahrzeugs, also in der Zeit, in der das Fahrzeug nicht im Betrieb genommen wird und das Bordnetz sich weitgehend in einem Ruhezustand befindet.

Als Notenergiequelle muss dieser Energiespeicher dann sicherstellen, dass die in einer Betriebsruhephase des Fahrzeugs noch aktiven Elektronikkomponenten wie die elektronische Wegfahrsperre mit ausreichendem Strom versorgt einwandfrei funktionieren.

Durch im Bordnetz befindliche parasitäre Elektronikkomponenten wie z. B. eine Steuervorrichtung für Bordnetz, welche in der Regel integrierte Schaltkreise enthalten und unmittelbar oder mittelbar mit dem als Notenergiequelle dienenden Energiespeicher elektrisch kontaktiert sind, entsteht im Bordnetz jedoch ein parasitärer Strom, welcher von dem Energiespeicher über diese Elektronikkomponenten abfließt.

Dieser parasitäre Strom führt dazu, dass der Energiespeicher sich schneller und unnötig entlädt. Dieser Entladevorgang wird durch die materialbedingte Selbstentladung des Energiespeichers verstärkt. Nach einer bestimmten Betriebsruhephase des Fahrzeugs kann sich der Energiespeicher so vollständig entladen und die Energieverbraucher im Bordnetz bei Bedarf nicht mehr mit Strom versorgen. Dies hat die Funktionsstörungen beim Fahrzeug zur Folge, wie z. B. das Fahrzeug lässt sich nach bestimmter Standzeit nicht mehr starten.

Die Aufgabe der vorliegenden Erfindung liegt somit darin, eine Möglichkeit zu schaffen, den Ladungsverlust durch den Leckstrom oder durch die Selbstentladung zu verhindern, und somit den Ladezustand der Energiequelle mit geringem Aufwand über längere Zeit zu erhalten.

Diese Aufgabe wird durch die unabhängigen Ansprüche gelöst. Vorteilhafte Ausgestaltungen sind Gegenstand der Unteransprüche.

Gemäß einem ersten Aspekt der Erfindung wird ein Bordnetz geschaffen, welches zumindest einen Energieverbraucher, eine erste Energiequelle und eine zweite Energiequelle zur Versorgung von dem zumindest einen Energieverbraucher mit Strom aufweist, wobei die zweite Energiequelle als ein wiederaufladbarer Energiespeicher ausgebildet ist und von der ersten Energiequelle aufladbar ist.

Ferner umfasst das Bordnetz eine Ermittlungseinrichtung zum Ermitteln von Ladungsverlust in der zweiten Energiequelle durch einen parasitären Leckstrom im Bordnetz und/oder durch einen Selbstentladestrom in der zweiten Energiequelle, sowie eine Steuereinrichtung zum Durchführen einer Strominjektion, also eines kontrollierten Stromflusses, von der ersten Energiequelle zu der zweiten Energiequelle zur Kompensation von Ladungsverlust in der zweiten Energiequelle.

Dadurch ist ein Bordnetz geschaffen, bei dem der durch einen parasitären Leckstrom oder durch eine Selbstentladung entstandene Ladungsverlust bei der zweiten Energiequelle bzw. bei dem Energiespeicher wirksam entgegengewirkt werden kann, sodass diese Energiequelle eine längere Bereitschaftsschaltzeit hat, und somit nach einer langen Betriebsruhephase des Fahrzeugs die Energieverbraucher im Bordnetz weiter zuverlässig mit Strom versorgen kann.

Ein parasitärer Leckstrom ist ein unkontrolliert im Bordnetz fließender Strom, der durch die im Bordnetz befindlichen parasitären Bauelemente wie z. B. parasitäre Widerstände, parasitäre Transistoren, parasitäre Spulen, parasitäre Kondensatoren oder parasitäre Schaltkreise, hindurchfließt, und unter Umständen zu Funktionsbeeinträchtigungen bei den Komponenten im Bordnetz verursachen kann.

Ein Selbstentladestrom ist ein Strom, der bspw. durch interne Kurzschlüsse bei einem als eine Batterie oder einer Doppelschichtkondensator ausgebildeten Energiespeicher entsteht und im Innern dieses Energiespeichers fließt und zu Entladung des Energiespeichers führt.

Eine Strominjektion ist ein kontrollierter Stromfluss durch einen Strompfad, mit einer vorab eingestellten Stromstärke und unter Umständen auch in einer einstellbaren Zeitdauer.

In einer vorteilhaften Ausgestaltung stellt die Steuereinrichtung die Stromstärke der Strominjektion abhängig von zumindest einer der Spannung an der ersten Energiequelle und der Spannung an der zweiten Energiequelle ein.

Dies hat den Vorteil, dass der für die Strominjektion erforderliche Strom genau dem vorangeschrittenen Ladungsverlust angepasst eingestellt werden kann und somit keine unnötige Stromverschwendung während der Strominjektion entsteht.

In einer vorteilhaften Ausgestaltung stellt die Steuereinrichtung die Stromstärke der Strominjektion mithilfe eines in einem Strompfad von der ersten Energiequelle zu der zweiten Energiequelle befindlichen Widerstands ein. Dadurch kann die Strominjektion auf einfacher Weise mit wenigen Mitteln bewerkstelligt werden.

In einer vorteilhaften Ausgestaltung ist der Widerstand regelbar und stellt die Steuereinrichtung den Widerstand abhängig von zumindest einer der Spannung an der ersten Energiequelle und der Spannung an der zweiten Energiequelle ein. Dies hat den Vorteil, dass die Stromstärke der Strominjektion genau auf die Summe der Stromstärken des Leckstromes und des Selbstentladestromes eingestellt wird, wodurch der Ladungsverlust bei der zweiten Energiequelle durch die Strominjektion hundertprozentig kompensiert werden kann.

In einer vorteilhaften Ausgestaltung führt die Steuereinrichtung die Strominjektion mit Strom von der ersten Energiequelle durch. Dies hat den Vorteil, dass keine weitere, unter Umständen externe Energiequelle extra für den für diese Strominjektion erforderlichen Strom erforderlich ist, sodass die Strominjektion nur mit im Bordnetz befindlichen vorhandenen Mitteln bewerkstelligt werden kann.

In einer weiteren vorteilhaften Ausgestaltung stellt die Steuereinrichtung die Stromstärke der Strominjektion mithilfe einer Stromquelle, insb. einer regelbaren Stromquelle einstellt. Dies hat den Vorteil, dass durch dieses aktive Schaltungselement die Stromstärke der Strominjektion der Summe der Stromstärken des Leckstromes und des Selbstentladestromes ohne nennenswerte Zeitverzögerung angepasst werden kann.

In noch einer weiteren vorteilhaften Ausgestaltung ermittelt die Ermittlungseinrichtung den Ladungsverlust in der zweiten Energiequelle unmittelbar vor Beginn einer Betriebsruhephase des Fahrzeugs, und führt die Steuereinrichtung die Strominjektion während der Betriebsruhephase des Fahrzeugs durch. Dies hat den Vorteil, dass eine Kompensation des Ladungsverlusts während einer Betriebsphase des Fahrzeugs nicht durchgeführt wird, welches wiederum vorteilhaft ist, da in dieser Phase die Elektronikkomponenten von anderen redundanten Energiequellen mit Strom versorgt werden können, und zudem die zweite Energiequelle dem Bordnetz selbst auch mit Strom einspeist und daher der Ladungsverlust nicht ausgeglichen werden muss. Die zur Berechnung der erforderlichen Stromstärke der Strominjektion Parameter können jedoch vor der Betriebsruhephase des Fahrzeugs und somit bevor die Ermittlungseinrichtung in eine Ruhephase übergeht, ermittelt werden.

Gemäß einem weiteren Aspekt der Erfindung wird eine Steuervorrichtung geschaffen, welche einen ersten und einen zweiten elektrischen Anschluss zur Herstellung elektrischer Verbindung zu einer ersten Energiequelle im Bordnetz; einen dritten elektrischen Anschluss, der zusammen mit dem zweiten Anschluss zur Herstellung elektrischer Verbindung zu einer zweiten Energiequelle im Bordnetz dient, welche als ein wiederaufladbarer Energiespeicher ausgebildet ist; eine erste elektrische Teilschaltung zwischen dem ersten und dem dritten Anschluss; sowie eine zweite elektrische Teilschaltung zwischen dem zweiten und dem dritten Anschluss mit zumindest einem parasitären Schaltungselement, wie z. B. einem parasitären Widerstand, einem parasitären Transistor, einer parasitären Spule, einem parasitären Kondensator oder einem integrierten Schaltkreis, aufweist. Ferner umfasst die Steuervorrichtung eine Ermittlungseinrichtung zum Ermitteln eines parasitären Leckstromes an der zweiten Teilschaltung, und eine Steuereinrichtung zum Durchführen einer kontrollierten Strominjektion bzw. eines kontrollierten Stromflusses, in der ersten Teilschaltung vom Anschluss zum Anschluss abhängig vom und zur Kompensation des ermittelten Leckstromes.

Die Ermittlung des parasitären Leckstromes an der zweiten Teilschaltung kann dabei mithilfe von einer Arbeitspunktbestimmung bei den beiden Energiequelle, durch Ermitteln der Ausgangsimpedanz bei der zweiten Teilschaltung, durch Messung der Spannung zwischen den zweiten und dritten Anschlüssen und/oder durch direkte Messung des parasitären Stromes an der zweiten Teilschaltung erfolgt werden.

Gemäß einem weiteren Aspekt der vorliegenden Erfindung wird ein Fahrzeug, insb. ein Hybridelektrofahrzeug, mit einem oben beschriebenen Bordnetz geschaffen.

Vorteilhafte Ausgestaltungen des oben dargestellten Bordnetzes sind, soweit im Übrigen auf die oben beschriebene Vorrichtung bzw. auf das oben genannte Fahrzeug übertragbar, auch als vorteilhafte Ausgestaltungen der Vorrichtung bzw. des Fahrzeugs anzusehen.

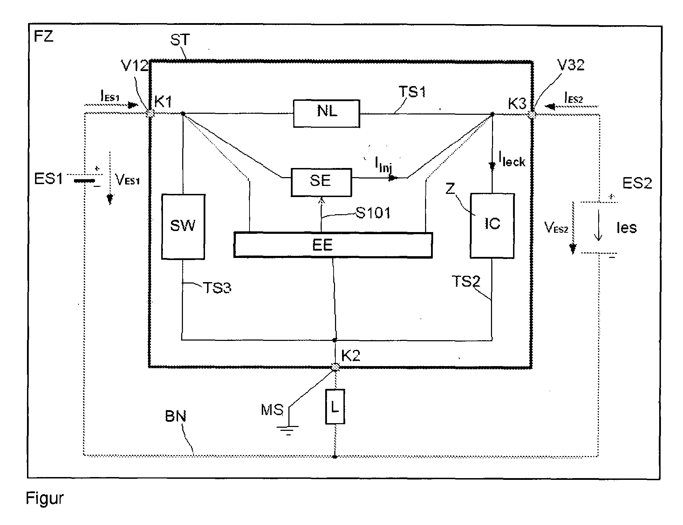

Im Folgenden wird die Erfindung anhand eines Ausführungsbeispiels unter Zuhilfenahme einer Figur näher erläutert. Als Beispiel dient ein Hybridelektrofahrzeug mit einem Bordnetz. Es zeigt dabei die Figur eine schematische Darstellung eines Hybridelektrofahrzeugs mit einem Bordnetz gemäß einem Ausführungsbeispiel.

Ein Fahrzeug FZ, insb. ein Hybridelektrofahrzeug, gemäß der Figur umfasst ein Bordnetz BN mit einer Gruppe von Energieverbrauchern L, einer ersten und einer zweiten Energiequelle ES1, ES2 zur Versorgung des Energieverbrauchers L mit Strom, sowie einer Steuervorrichtung ST. Die zweite Energiequelle ES2 ist als ein wiederaufladbarer Energiespeicher ausgebildet.

Die zweite Energiequelle ES2 zur Versorgung von Energieverbrauchern L wie z. B. einer elektrischen Wegfahrsperre, wenn das Fahrzeug FZ in Betriebsruhephase befindet und die erste Energiequelle ES1 von der Steuervorrichtung ST gesteuert von dem Bordnetz BN ausgeschaltet und somit die Energieverbraucher L nicht mit Strom versorgt. Die ersten und zweiten Energiequellen ES1, ES2 und der Energieverbraucher L sind in diesem Ausführungsbeispiel nicht potentialgetrennt. Es sind auch Bordnetze bekannt, wobei die ersten und/oder zweiten Energiequellen ES1, ES2 voneinander bzw. von den Energieverbrauchern im Bordnetz potentialgetrennt sind.

Die Steuervorrichtung ST umfasst drei Anschlüsse K1, K2, K3.

Über den ersten Anschluss K1 ist die Steuervorrichtung ST mit dem Pluspol der ersten Energiequelle ES1 elektrisch verbunden.

Über den dritten Anschluss K2 ist die Steuervorrichtung ST mit dem Pluspol der zweiten Energiequelle ES2 elektrisch verbunden.

Über den zweiten Anschluss K2 ist die Steuervorrichtung ST mit dem Energieverbraucher L und einer elektrischen Masse MS verbunden.

Zwischen dem ersten und dem dritten Anschluss K1, K2 weist die Steuervorrichtung ST eine erste Teilschaltung TS1 mit einer Nachladeeinheit NL auf. Diese Nachladeeinheit NL dient dazu, die zweite Energiequelle ES2 mit Strom von der ersten Energiequelle ES1 aufzuladen, und umfasst einen in der Figur nicht dargestellten DC/DC-Wandler.

Zwischen dem dritten und dem zweiten Anschluss K3, K2 weist die Steuervorrichtung ST eine zweite Teilschaltung TS2 mit einer integrierten Schaltung IC wie z. B. als ein Teil eines Mikrokontrollers auf. Diese integrierte Schaltung IC weist in dieser Figur nicht näher dargestellte parasitäre Bauelemente auf, durch die parasitäre Leckströme Ileck fließen können.

Zwischen dem ersten und zweiten Anschluss K1, und K2 weist die Steuervorrichtung ST eine dritten Teilschaltung TS3 mit einem steuerbaren Schalter SW auf, der in einem geschlossen Schaltzustand einen geschlossenen Stromkreis von der ersten Energiequelle ES1 zu dem Energieverbraucher L herstellt und in einem geöffneten Schaltzustand diesen geschlossenen Stromkreis wieder öffnet.

Ferner weist die Steuervorrichtung eine Ermittlungseinrichtung EE, welche mit dem ersten, dem zweiten und dem dritten Anschluss K1, K2, K3 elektrisch verbunden ist, die Spannungen Ves1, Ves2 zwischen dem ersten und dem zweiten Anschluss K1, K2 bzw. zwischen dem dritten und dem zweiten Anschluss K3, K2 erfasst. Ferner ermittelt die Ermittlungseinrichtung EE die Impedanz Z an der integrierten Schaltung IC bzw. zwischen dem dritten und dem zweiten Anschluss K3, K2 und speichert diese ermittelte Impedanz Z in einer in dieser Figur nicht näher dargestellten Speichereinheit.

Zwischen dem ersten und dem dritten Anschluss K1, K3 weist die Steuervorrichtung ST zudem eine Steuereinrichtung SE zum Durchführen einer gesteuerten Strominjektion Iinj, also einen gesteuerten Stromfluss bzw. eine gesteuerten Stromzufuhr, von dem ersten Anschluss K1 zu dem dritten Anschluss K3 und somit von der ersten Energiequelle ES1 zu der zweiten Energiequelle ES2.

Diese Steuereinrichtung SE weist in einer ersten, in der Figur nicht näher dargestellten Ausführungsform eine elektrische passive Schaltung mit einem steuerbaren Schalter und einem regelbaren Widerstand, also einem Potentiometer, in einer Serienschaltung, auf.

Alternativ weist die Steuereinrichtung SE in einer zweiten, ebenfalls in der Figur nicht näher dargestellten Ausführungsform eine elektrische aktive Schaltung mit einer regelbaren Stromquelle auf.

Die Ermittlungseinrichtung EE ist über eine Signalleitung S101 mit der Steuereinrichtung SE elektrisch verbunden.

Aufgrund parasitärer Effekte in den Halbleiterbauelementen in der integrierten Schaltung IC entsteht in der zweiten Teilschaltung TS2 der Steuervorrichtung ST ein Leckstrom Ileck, welcher durch niedrige Impedanz Z der integrierten Schaltung IC verstärkt wird. Während der Aufladephase der zweiten Energiequelle ES2 durch die erste Energiequelle ES1 wird dieser Leckstrom Iinj durch den Ladestrom kompensiert.

In einer Betriebsruhephase des Fahrzeugs FZ, somit in einem Ruhezustand (auf Englisch: sleep mode) des Bordnetzes BN, in dem sich die Steuervorrichtung ST in einem Stromsparmodus befindet und die zweite Energiequelle ES2 nicht aufgeladen wird, führt der Leckstrom Ileck jedoch zu einem Ladungsabfluss und somit zu einem Ladungsverlust in der zweiten Energiequelle ES2, was wiederum dazu führt, dass die zweite Energiequelle ES2 sich mit der Zeit entlädt, und nicht mehr die elektronischen Geräten im Fahrzeug, wie z. B. die elektrische Wegfahrsperre mit Strom versorgen kann. Dies hat zur Folge, dass die Bereitschaftsschaltzeit (Standby-Zeit) bei dem Fahrzeug FZ oder bei den elektronischen Geräten im Bordnetz BN entsprechend verkürzt wird. Der Ladungsverlust an der zweiten Energiequelle ES2 ist durch einen speichertypbedingten Selbstentladungsprozess mit einem Selbstentladestrom Ies in der zweiten Energiequelle ES2 verstärkt, der durch den Innenbereich der Energiequelle ES2 hindurchfließt.

Diese Ladungsverlusten durch den Leckstrom Ileck oder den Selbstentladestrom Ies sind bedingt durch die physikalischen Eigenschaften der elektronischen oder elektromechanischen Bauelementen in der integrierten Schaltung IC oder der Energiespeicherelementen der zweiten Energiequelle ES1, und somit unvermeidbar. Diese Ströme sind aber mittels geeigneten Maßnahmen kompensierbar.

Diese Kompensation erfolgt mithilfe einer arbeitspunktbestimmten oder regelbaren Strominjektion Iinj, also Stromzufuhr, von der ersten Energiequelle ES1 zur zweiten Energiequelle ES2. Diese Strominjektion Iinj kompensiert einerseits den Leckstrom Ileck, der durch die integrierte Schaltung IC abfließt, und andererseits die Selbstentladung der zweiten Energiequelle ES2.

Hierzu ermittelt die Steuervorrichtung, vorzugsweise unmittelbar bevor sie in einen Ruhezustand übergeht, in dem diese ihre Funktionen weitgehend abschaltet, mithilfe der Ermittlungseinrichtung EE den Leckstrom Ileck an der

integrierten Schaltung IC und stellt mithilfe der Steuereinrichtung SE die Stromstärke der Strominjektion Iinj von der ersten Energiequelle ES1 zur zweiten Energiequelle ES2 ein.

Die Ermittlungseinrichtung EE erfasst dabei die Spannungen V12, V32, die jeweils zwischen dem ersten Anschluss K1 und dem zweiten Anschluss K2 bzw. zwischen dem dritten Anschluss K3 und dem zweiten Anschluss K2 anliegen. Da die Steuervorrichtung ST über den ersten und dritten Anschluss K1, K3 mit jeweils einem Pluspol der beiden Energiequellen ES1, ES2 elektrisch verbunden und über den zweiten Anschluss K2 und über den "ohm'schen" Energieverbraucher L mit dem Minuspol der beiden Energiequellen ES1, ES2 und mit der elektrischen Masse MS elektrisch verbunden ist, ist die eine Spannung V12 gleich der Ladespannung Ves1 der ersten Energiequelle ES1 und die andere Spannung V32 gleiche der Ladespannung Ves2 der zweiten Energiequelle ES2.

Aus der gemessenen Ladespannung V32 bzw. Ves2 der zweiten Energiequelle ES2 sowie weiteren im Vorfeld gemessen und in einer hier nicht näher dargestellten Speichereinheit abgespeicherten Parameter berechnet die Ermittlungseinrichtung EE die zu erwartenden Stromstärke des Selbstentladestromes Ies. Basierend auf dieser Ladespannung Ves2 und der vorab gemessenen Impedanz Z der integrierten Schaltung IC berechnet die Ermittlungseinrichtung die zu erwartende Stromstärke des Leckstromes Ileck, wobei gilt Ileck = Ves2/Z.

Alternativ zur Berechnung kann der Leckstrom Ileck anhand eines Strom-/Spannungsarbeitspunktes der Steuervorrichtung ST ermittelt werden. Die zeitliche Ladungsveränderung in der zweiten Energiequelle ES2 wegen dem speicherinternen Selbstentladungsprozess wird der Leckstrom Ileck durch Ermittlung der Spannungsveränderung des Spannungspotentials Ves2 an der Energiequelle ES2 pro Zeiteinheit in einem Ruhezustand der Energiequelle ES2, in dem kein Strom von der Energiequelle ES2 aktiv abgenommen wird, indirekt erfasst.

Die erforderliche Stromstärke bei der Strominjektion Iinj soll gleich der Summe der Stromstärke des Leckstromes Ileck und die Stromstärke des Selbstentladestromes Ies sein: Iinj=Ileck+Ies, um die zweite Energiequelle ES2 in einem Ladezustand ohne voranschreitenden Ladungsverlust halten zu können.

Durch die entsprechende Strominjektion Iinj im Ruhezustand der Steuervorrichtung ST und der zweiten Energiequelle ES2 lässt sich der Ladungsverlust durch den Leckstrom Ileck in der integrierten Schaltung IC und den Selbstentladungsstrom Ies in der zweiten Energiequelle ES2 kompensieren und somit bleibt die zweite Energiequelle ES2 auch über längere Zeit während des Ruhezustands der Steuervorrichtung ST, in dem die zweite Energiequelle ES2 nicht aktiv aufgeladen wird, im Ladezustand (auf Englisch: State of Charge) erhalten.

Die Einstellung der Stärke des Injektionsstromes Iinj erfolgt durch die Steuereinrichtung SE. Ist die Steuereinrichtung SE mit einer regelbaren Stromquelle ausgestattet, so erhält die Steuereinrichtung SE von der von der Ermittlungseinrichtung EE die zur Kompensation erforderliche Stromstärke des Injektionsstromes Iinj in Form von einem Datensignal über die Signalverbindung S101 und stellt die Stromquelle auf einen Stromwert gleich Iinj = Ileck+Ies und führt so eine Kompensation durch.

Ist die Steuereinrichtung SE mit einem mit einem steuerbaren Schalter in Serie geschalteten regelbaren Widerstand ausgestattet, so erhält diese von der Ermittlungseinrichtung EE über die Signalverbindung S101 ein Datensignal mit Information über den einzustellenden Widerstandswert R, den die Ermittlungseinrichtung EE basierend auf den gemessenen Ladespannungswerte Ves1, Ves2, bzw. der Impedanz Z der integrierten Schaltung IC mithilfe folgender Gleichung berechnet:

$$R= (Ves1-Ves2)/(Ileck+Ies),\ wobei\ gilt\ Ileck=Ves2/Z.$$

Der Selbstentladungsstrom Ies wird basierend auf der Ladespannung Ves2 an der zweiten Energiequelle ES2 und den produktspezifischen Daten, wie z. B. dem Innenwiderstand der Energiespeicherzelle der Energiequelle ES2 ermittelt.

Alternativ zu einer hundertprozentigen Kompensation des Leckstromes Ileck und des Selbstentladungsstromes Ies, in der der Ladezustand in der zweiten Energiequelle ES2 weitgehend gleichbleibend aufrechterhalten wird, kann eine Überkompensation oder Unterkompensation der zweiten Energiequelle ES2 veranlasst werden. Bei einer Überkompensation gilt folgende Gleichung:

$$R < (Ves1-Ves2)/(Ileck + Ies)\ mit\ Iinj > Ileck+Ies,$$

also der Injektionsstrom Iinj ist größer als die Summe von dem Leckstrom Ileck und dem Selbstentladungsstrom Ies. Bei der Überkompensation wird die zweite Energiequelle ES2 mit überschüssigem Stromanteil der Strominjektion Iinj aufgeladen.

Bei einer Unterkompensation gilt folgende Gleichung:

$$R > (Ves1-Ves2)/(Ileck + Ies) \text{ mit } Iinj < Ileck+Ies,$$

also der Injektionsstrom Iinj ist kleiner als die Summe von dem Leckstrom Ileck und dem Selbstentladungsstrom Ies. Bei der Unterkompensation wird die zweite Energiequelle ES2 kontrolliert entladen.

**Patentansprüche**

1.  Bordnetz (BN) für ein Fahrzeug (FZ), mit folgenden Merkmalen:

    - zumindest einem Energieverbraucher (L),
    - einer ersten Energiequelle (ES1) zur Versorgung von dem zumindest einen Energieverbraucher (L) mit Strom,
    - einer zweiten Energiequelle (ES2) zur Versorgung von dem zumindest einen Energieverbraucher (L) mit Strom, die als ein wiederaufladbarer Energiespeicher ausgebildet ist und von der ersten Energiequelle (ES1) aufladbar ist, und mit folgenden kennzeichnenden Merkmalen:
    - einer Ermittlungseinrichtung (EE) zum Ermitteln von einem parasitären Leckstrom (Ileck) in dem Bordnetz (BN) und/oder einem Selbstentladestrom (Ise) in der zweiten Energiequelle (ES2),
    - einer Steuerseinrichtung (SE) zum Durchführen einer Strominjektion (Iinj) von der ersten Energiequelle (ES1) zu der zweiten Energiequelle (ES2) zur Kompensation von dem parasitären Leckstrom (Ileck) und/oder dem Selbstentladestrom (Ise).

2.  Bordnetz (BN) nach Anspruch 1, wobei die Steuerseinrichtung (SE) die Stromstärke der Strominjektion (Iinj) abhängig von zumindest einer der Spannung (Ves1) an der ersten Energiequelle (ES1) und der Spannung (Ves2) an der zweiten Energiequelle (ES2) einstellt.

3.  Bordnetz (BN) nach Anspruch 1 oder 2, wobei die Steuerseinrichtung (SE) die Stromstärke der Strominjektion (Iinj) mithilfe eines Widerstands (R) einstellt.

4.  Bordnetz (BN) nach einem der vorangehenden Ansprüche, wobei die Steuerseinrichtung (SE) mit Strom (Ies1) von der ersten Energiequelle (ES1) die Strominjektion (Iinj) durchführt.

5.  Bordnetz (BN) nach Anspruch 1 oder 2, wobei die Steuerseinrichtung (SE) die Stromstärke der Strominjektion (Iinj) mithilfe einer Stromquelle (SQ) einstellt.

6.  Bordnetz (BN) nach einem der vorangehenden Ansprüche, wobei die Ermittlungseinrichtung (EE) den parasitären Leckstrom (Ileck) und/oder den Selbstentladestrom (Ise) unmittelbar vor Beginn einer Betriebsruhephase des Fahrzeugs (FZ) ermittelt, und die Steuerseinrichtung (SE) die Strominjektion (Iinj) während der Betriebsruhephase des Fahrzeugs (FZ) durchführt.

7.  Steuervorrichtung (ST) zum Steuern von Stromfluss in einem Bordnetz (BN) eines Fahrzeugs (FZ), mit folgenden Merkmalen:

    - einem ersten (K1), einem zweiten (K2) elektrischen Anschluss zur Herstellung elektrischer Verbindung zu einer ersten Energiequelle (ES1) im Bordnetz (BN),
    - dem ersten (K1) und einem dritten elektrischen Anschluss (K3) zur Herstellung elektrischer Verbindung zu einer zweiten Energiequelle (ES2) im Bordnetz (BN),
    - einer ersten elektrischen Teilschaltung (TS1) zwischen dem ersten (K1) und dem dritten (K3) Anschluss, und mit folgenden kennzeichnenden Merkmalen: - einer zweiten elektrischen Teilschaltung (TS2) zwischen dem zweiten (K2) und dem dritten (K3) Anschluss mit zumindest einem parasitären Schaltungselement,
    - einer Ermittlungseinrichtung (EE) zum Ermitteln eines parasitären Leckstromes (Ileck) an der zweiten Teilschaltung (TS2),
    - einer Steuereinrichtung (SE) zum Durchführen eines kontrollierten Stromflusses (Iinj) in der ersten Teilschaltung (TS1) abhängig vom und zur Kompensation des ermittelten Leckstromes (Ileck).

8.  Fahrzeug (FZ) mit einem Bordnetz (BN) nach einem der Ansprüche 1 bis 6.

**Claims**

1. Vehicle electrical distribution system (BN) for a vehicle (FZ), having the following features:

   - at least one energy consumer (L),
   - a first energy source (ES1) for supplying the at least one energy consumer (L) with current,
   - a second energy source (ES2) for supplying the at least one energy consumer (L) with current, which second energy source is designed as a rechargeable energy store and can be charged by the first energy source (ES1),

   and having the following characterizing features:

   - a determining device (EE) for determining a parasitic leakage current (Ileck) in the vehicle electrical distribution system (BN) and/or a self-discharge current (Ise) in the second energy source (ES2),
   - a control device (SE) for performing a current injection (Iinj) from the first energy source (ES1) to the second energy source (ES2) to compensate for the parasitic leakage current (Ileck) and/or the self-discharge current (Ise).

2. Vehicle electrical distribution system (BN) according to Claim 1, wherein the control device (SE) sets the current strength of the current injection (Iinj) as a function of at least one of the voltage (Ves1) across the first energy source (ES1) and the voltage (Ves2) across the second energy source (ES2).

3. Vehicle electrical distribution system (BN) according to Claim 1 or 2, wherein the control device (SE) sets the current strength of the current injection (Iinj) using a resistor (R).

4. Vehicle electrical distribution system (BN) according to one of the preceding claims, wherein the control device (SE) performs the current injection (Iinj) using current (Ies1) from the first energy source (ES1).

5. Vehicle electrical distribution system (BN) according to Claim 1 or 2, wherein the control device (SE) sets the current strength of the current injection (Iinj) using a current source (SQ).

6. Vehicle electrical distribution system (BN) according to one of the preceding claims, wherein the determining device (EE) determines the parasitic leakage current (Ileck) and/or the self-discharge current (Ise) directly before the start of a non-operational phase of the vehicle (FZ), and the control device (SE) performs the current injection (Iinj) during the non-operational phase of the vehicle (FZ).

7. Control device (ST) for controlling the flow of current in a vehicle electrical distribution system (BN) for a vehicle (FZ), having the following features:

   - a first (K1) and a second (K2) electrical terminal for producing an electrical connection to a first energy source (ES1) in the vehicle electrical distribution system (BN),
   - the first (K1) and a third (K3) electrical terminal for producing an electrical connection to a second energy source (ES2) in the vehicle electrical distribution system (BN),
   - a first electrical partial circuit (TS1) between the first (K1) and the third (K3) terminal,

   and having the following characterizing features:

   - a second electrical partial circuit (TS2) between the second (K2) and the third (K3) terminal having at least one parasitic circuit element,
   - a determining device (EE) for determining a parasitic leakage current (Ileck) at the second partial circuit (TS2),
   - a control device (SE) for feeding through a controlled flow of current (Iinj) in the first partial circuit (TS1) as a function of and to compensate for the determined leakage current (Ileck).

8. Vehicle (FZ) having a vehicle electrical distribution system (BN) according to one of Claims 1 to 6.

**Revendications**

1. Réseau de bord (BN) pour un véhicule (FZ), comprenant les caractéristiques suivantes :

- au moins un consommateur d'énergie (L),
- une première source d'énergie (ES1) destinée à alimenter l'au moins un consommateur d'énergie (L) en courant,
- une seconde source d'énergie (ES2) destinée à alimenter l'au moins un consommateur d'énergie (L) en courant, réalisée sous la forme d'un accumulateur d'énergie rechargeable, et pouvant être chargée par la première source d'énergie (ES1),

et comprenant les caractéristiques caractérisantes suivantes :

- un dispositif de détection (EE) destiné à détecter un courant de fuite parasitaire (Ileck) dans le réseau de bord (BN) et/ou un courant de décharge spontanée (Ise) dans la seconde source d'énergie (ES2),
- un dispositif de commande (SE) permettant de mettre en oeuvre une injection de courant (Iinj) de la première source d'énergie (ES1) à la seconde source d'énergie (ES2) pour compenser le courant de fuite parasitaire (Ileck) et/ou le courant de décharge spontanée (Ise).

2. Réseau de bord (BN) selon la revendication 1, le dispositif de commande (SE) réglant l'intensité de l'injection de courant (Iinj) en fonction d'au moins une tension parmi la tension (Ves1) sur la première source d'énergie (ES1) et la tension (Ves2) sur la seconde source d'énergie (ES2).

3. Réseau de bord (BN) selon la revendication 1 ou 2, le dispositif de commande (SE) réglant l'intensité de l'injection de courant (Iinj) à l'aide d'une résistance (R).

4. Réseau de bord (BN) selon l'une quelconque des revendications précédentes, le dispositif de commande (SE) mettant en oeuvre l'injection de courant (Iinj) avec le courant (Ies1) de la première source d'énergie (ES1).

5. Réseau de bord (BN) selon la revendication 1 ou 2, le dispositif de commande (SE) réglant l'intensité de l'injection de courant (Iinj) à l'aide d'une source de courant (SQ).

6. Réseau de bord (BN) selon l'une quelconque des revendications précédentes, le dispositif de détection (EE) détectant le courant de fuite parasitaire (Ileck) et/ou le courant de décharge spontanée (Ise) à l'instant précédant le début d'une phase de repos du véhicule (FZ), et le dispositif de commande (SE) mettant en oeuvre l'injection de courant (Iinj) pendant la phase de repos du véhicule (FZ).

7. Dispositif de commande (ST) destiné à commander le flux de courant dans un réseau de bord (BN) d'un véhicule (FZ), comprenant les caractéristiques suivantes :

- un premier raccordement électrique (K1) et un deuxième raccordement électrique (K2) destinés à établir une connexion électrique avec une première source d'énergie (ES1) dans le réseau de bord (BN),
- le premier raccordement électrique (K1) et un troisième raccordement électrique (K3) destinés à établir une connexion électrique avec une seconde source d'énergie (ES2) dans le réseau de bord (BN),
- une première partie de circuit électrique (TS1) entre le premier raccordement (K1) et le troisième raccordement (K3),

et comprenant les caractéristiques caractérisantes suivantes :

- une seconde partie de circuit électrique (TS2) entre le deuxième raccordement (K2) et le troisième raccordement (K3) pourvue d'au moins un élément de circuit parasitaire,
- un dispositif de détection (EE) destiné à détecter un courant de fuite parasitaire (Ileck) sur la seconde partie de circuit (TS2),
- un dispositif de commande (SE) permettant de mettre en oeuvre un flux de courant (Iinj) contrôlé dans la première partie de circuit (TS1) en fonction du courant de fuite (Ileck) détecté et pour compenser celui-ci.

8. Véhicule (FZ) pourvu d'un réseau de bord (BN) selon l'une quelconque des revendications 1 à 6.

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9941820 A1